# EUROPEAN PATENT APPLICATION

(11) **EP 4 834 798 A1**
(43) Date of publication of application: **04.11.2026**
(21) Application number: 24933823.7
(22) Date of filing: 02.12.2024
(51) Int. Cl.: B65G 1/04

(54) **WORKSTATION AND LOGISTICS SYSTEM**

(30) Priority: 01.04.2024 CN 202420684907 U
(71) Applicant: Hai Robotics Co., Ltd., Shenzhen, Guangdong 518000 (CN)
(72) Inventor: FENG, Xiao, Shenzhen, Guangdong 518000 (CN); YAN, Zhikai, Shenzhen, Guangdong 518000 (CN)
(74) Representative: Gulde & Partner
(86) International application number: PCT/CN2024/136216
(87) International publication number: WO 2025/208899

(57) **Abstract**

This application provides a workstation and a logistics system, and relates to the field of warehousing and logistics technologies. The workstation includes a conveying assembly and a lifting device. The conveying assembly includes a conveyor, and the lifting device is arranged on a side of the conveying assembly. The lifting device is configured to dock with a robot, so that the robot can exchange goods or totes with the conveyor. The logistics system includes the workstation. This application is to at least resolve the problems of high costs and large space occupation during docking between the robot and the workstation.

## Description

### CROSS-REFERENCES

This application claims priority to Chinese Patent Application No. 202420684907.3, entitled "WORKSTATION AND LOGISTICS SYSTEM", and filed on April 1, 2024, which is incorporated herein by reference in its entirety.

### TECHNICAL FIELD

This application relates to the field of warehousing and logistics technologies, and in particular, to a workstation and a logistics system.

### BACKGROUND OF THE INVENTION

In modern logistics warehousing, a workstation is one of components of a goods-to-person robotic warehousing and picking system. The workstation may be configured for operations such as inbound storage, inventory checking, and sorting of goods. Generally, a robot transports goods or totes from a storage area to the workstation. After the workstation completes an operation, the robot transports the operated goods or totes to the storage area.

However, the existing workstation has technical problems of high costs and large space occupation during docking between the robot and the workstation.

### SUMMARY OF THE INVENTION

This application provides a workstation and a logistics system, to at least partially resolve the technical problems of high costs and large space occupation during docking between a robot and the workstation.

To achieve the foregoing objective, embodiments of this application provide the following technical solutions.

A first aspect of embodiments of this application provides a workstation, including: a conveying assembly and a lifting device, where the conveying assembly includes a conveyor, the lifting device is arranged on a side of the conveying assembly, and the lifting device is configured to dock with a robot, to enable the robot to exchange goods or totes with the conveyor.

In some embodiments, the conveying assembly includes two conveyors, and the two conveyors extend in the same direction and are spaced apart in a vertical direction.

In some embodiments, the two conveyors include a first conveyor and a second conveyor, the first conveyor is configured to convey empty totes, the second conveyor is configured to convey totes containing goods, and the first conveyor and the second conveyor have opposite conveying directions.

In some embodiments, the workstation further includes: a sorting device, where the sorting device is arranged on a side of the conveying assembly and connected to the second conveyor.

In some embodiments, the sorting device and the lifting device are respectively arranged on two opposite sides of the conveying assembly.

In some embodiments, the lifting device is arranged on a side of the conveying assembly in a length direction and located at an end portion away from the sorting device.

In some embodiments, the lifting device includes a lifting rail, and the lifting rail extends in the vertical direction.

In some embodiments, two lifting rails are provided, and the two lifting rails are spaced apart in the length direction of the conveying assembly.

In some embodiments, the sorting device includes a sorting position and a transfer mechanism, and two ends of the transfer mechanism are respectively connected to the sorting position and the second conveyor.

In some embodiments, the second conveyor is located below the first conveyor, and the transfer mechanism docks with the second conveyor, to cause goods or totes at the sorting position to be transferred to the second conveyor through the transfer mechanism.

In some embodiments, the first conveyor is located below the second conveyor.

In some embodiments, the conveying assembly is further provided with a support frame, the support frame is configured to support the conveyor, and the lifting device is arranged in the support frame.

A second aspect of embodiments of this application provides a logistics system, including a robot and the workstation provided in the foregoing embodiments, where the robot is configured to transport goods or totes to the workstation or transport goods or totes from the workstation to another destination.

In some embodiments, the robot includes a robot body and a climbing assembly arranged on a side of the robot body, the lifting device includes a lifting rail arranged on a side of a conveying assembly, and the robot ascends and descends on the lifting rail through the climbing assembly, and picks up or places goods or totes from or onto the conveying assembly.

Compared with the related technology, the workstation and the logistics system provided in the embodiments of this application include at least the following advantages.

In the workstation provided in the embodiments of this application, the lifting device is arranged on a side of the conveying assembly, where the conveying assembly includes the conveyor, and the lifting device is configured to dock with the robot, so that the robot can exchange goods or totes with the conveyor. In this way, the technical problems of high costs and large space occupation during docking between the robot and the workstation can be at least partially resolved.

In addition to the technical problems resolved in the embodiments of this application, technical features constituting technical solutions, and beneficial effects brought by the technical features of the technical solutions described above, other technical problems, other technical features included in the technical solutions, and the beneficial effects brought by the technical features that can be resolved by the workstation and the logistics system provided in this application are further described in detail in specific implementations.

### BRIEF DESCRIPTION OF THE DISCLOSURE

To describe the technical solutions of embodiments of this application or the related art more clearly, the following briefly introduces the accompanying drawings required for describing the embodiments or the related art. Apparently, the accompanying drawings in the following description show some embodiments of this application, and a person of ordinary skill in the art may still derive other drawings from these accompanying drawings without creative efforts.
FIG. 1 is a schematic structural diagram of a workstation according to an embodiment of this application;
FIG. 2 is a schematic diagram of the workstation according to an embodiment of this application from another perspective;
FIG. 3 is a partial enlarged view of portion A in FIG. 2;
FIG. 4 is another schematic structural diagram of the workstation according to an embodiment of this application; and
FIG. 5 is a schematic structural diagram of a robot according to an embodiment of this application.

In the drawings:
10-Workstation;
100-Conveying assembly; 110-Conveyor;
110a-First conveyor; 110b-Second conveyor;
111-Powered conveying section; 112-Connecting section; 113-Connecting frame;
114-Roller; 114a-First roller; 114b-Second roller;
200-Lifting device 210-Lifting rail;
300-Sorting device; 310-Sorting position; 320-Transfer mechanism; 330-IT device;
400-Tote; 410-Empty tote;
500-Protective net; 600-Support frame;
20-Robot; 201-Robot body; and 202-Climbing assembly.

### DETAILED DESCRIPTION

To make the foregoing objectives, features, and advantages of embodiments of this application clearer and more comprehensible, the following clearly and completely describes technical solutions in the embodiments of this application with reference to the accompanying drawings in the embodiments of this application. Apparently, the described embodiments are some embodiments rather than all the embodiments of this application. All other embodiments obtained by a person of ordinary skill in the art based on embodiments of this application without creative efforts shall fall within the protection scope of this application.

First, a person skilled in the art should understand that the implementations are merely used for explaining technical principles of this application, and are not intended to limit the protection scope of this application. A person skilled in the art may perform adjustment according to needs, to adapt to a specific application.

It should be noted that, in the descriptions of this application, a direction or a position relationship indicated by the terms such as "inside" and "outside" is an orientation or a position relationship shown in the accompanying drawings, and is merely used to facilitate the descriptions, rather than indicating or implying that an apparatus or component needs to have a specific direction, or needs to be constructed in a specific orientation, or needs to be operated in a specific direction. Therefore, such terms cannot be construed as a limitation on this application.

In addition, it should be further noted that, in the descriptions of this application, unless otherwise clearly specified and limited, the terms "connection" and "connected" should be understood in a generalized manner, for example, may be fixedly connected (for example, detachable fixedly connected or non-detachable fixedly connected), may be actively connected, or may be integrally connected; may be mechanically connected, or may be electrically connected; may be internally communicated between two components, may be directly connected, or may be indirectly connected through an intermediate member. A person skilled in the art may understand specific meanings of the foregoing terms in this application according to specific situations. In this application, "connected" and "mounted" may be used interchangeably.

With the development of artificial intelligence and automation technologies, various types of robots have been widely used in industrial, residential, and other fields. In modern logistics warehousing, a workstation is one of components of a goods-to-person robotic warehousing and picking system. However, in the prior art, docking a climbing robot with the workstation faces certain difficulties. Because the climbing robot generally has a relatively small size and a very low overall height, in consideration of operator comfort and convenience, a device of the workstation generally has a particular height. Consequently, the robot cannot directly dock with the workstation, or a climbing robot docking solution has problems of high costs and large space occupation.

For the foregoing problems, the embodiments of this application provide a workstation and a logistics system. In the workstation, a lifting device is arranged on a side of a conveying assembly, where the conveying assembly includes a conveyor, the lifting device is configured to dock with a robot, so that the robot can exchange goods or totes with the conveyor. In this way, the technical problems of high costs and large space occupation during docking between the robot and the workstation can be at least partially resolved.

For ease of understanding, an application scenario of the embodiments of this application is first described.

The workstation provided in the embodiments of this application may be applied to different fields such as logistics sorting in industrial production lines, outbound and inbound operations of inventory products in the manufacturing industry, outbound and inbound operations of products in the retail industry, or outbound and inbound operations of parcels in e-commerce logistics. The transported goods may be industrial components, electronic parts or products, pharmaceuticals, clothing and accessories, food, books, and the like. The workstation may dock with a transporting robot, or may dock with other transporting devices in the logistics system. This is not specifically limited in the embodiments of this application. In addition, products transported or sorted by the workstation are collectively referred to as "goods", and the totes may be container structures such as a carton for storing goods. In the embodiments of this application, container structures used for storing goods are collectively referred to as "totes".

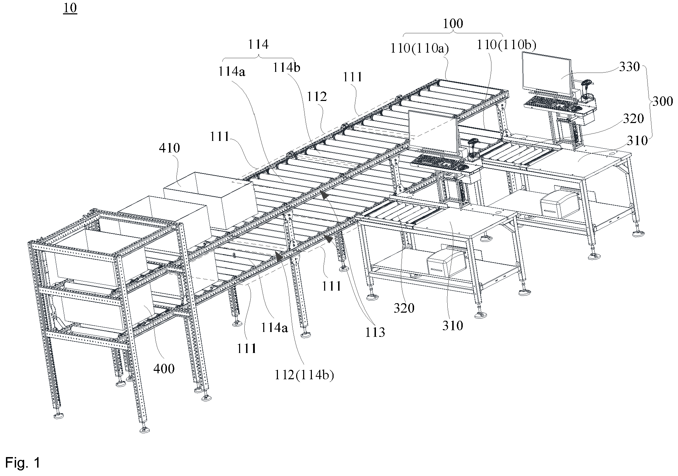

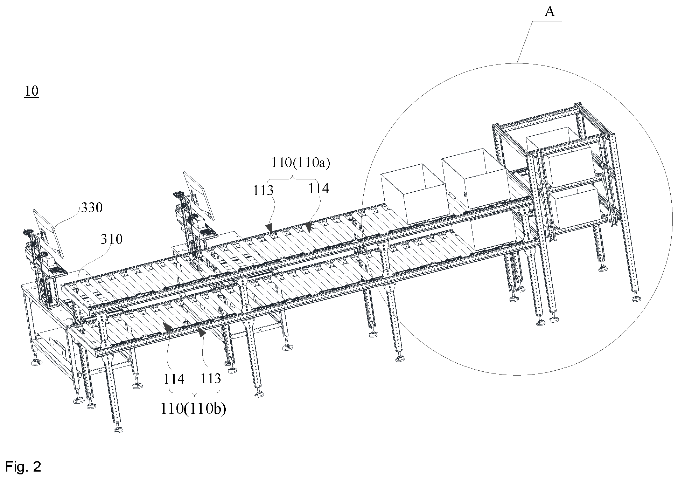

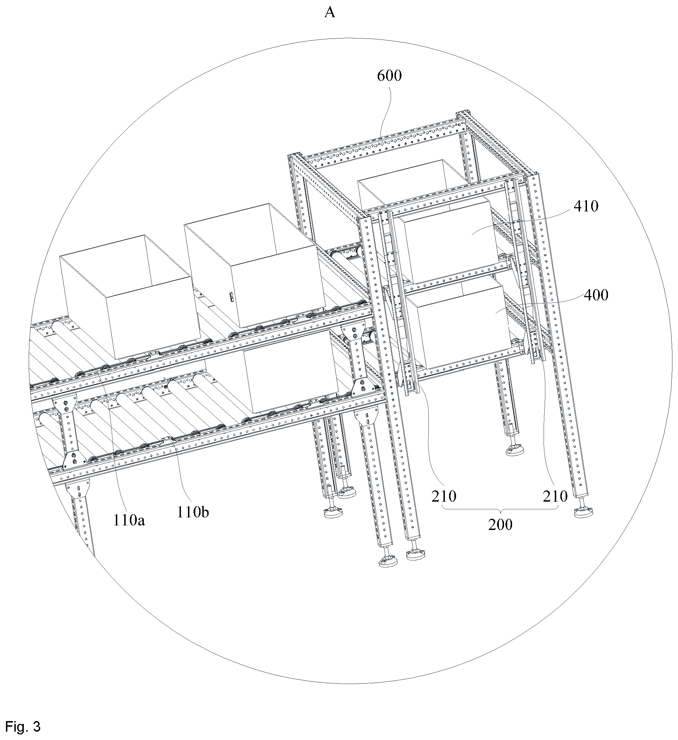

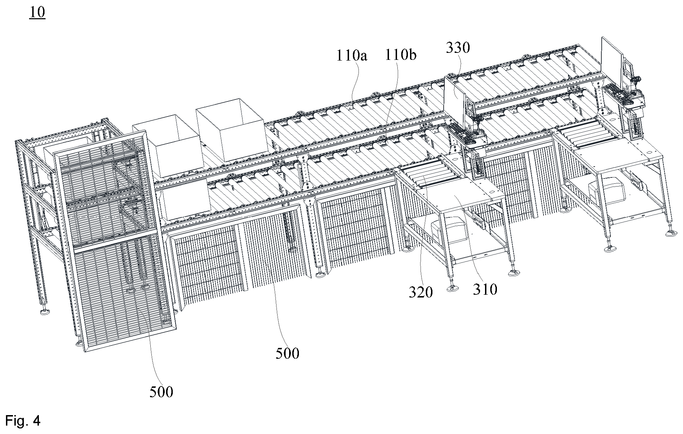

FIG. 1 is a schematic structural diagram of a workstation according to an embodiment of this application; FIG. 2 is a schematic diagram of the workstation according to an embodiment of this application from another perspective; FIG. 3 is a partially enlarged view of portion A in FIG. 2; and FIG. 4 is another schematic structural diagram of the workstation according to an embodiment of this application.

Referring to FIG. 1 to FIG. 4, the embodiments of this application provide a workstation 10, and the workstation 10 includes a conveying assembly 100 and a lifting device 200.

The conveying assembly 100 includes a conveyor 110. For example, the conveyor 110 may be a powered conveyor or an unpowered conveyor. For example, when the conveyor 110 is a powered conveyor, the conveyor 110 may drive goods or totes to move along a conveying direction under a driving force of a power source. When the conveyor 110 is an unpowered conveyor, goods or a tote 400 may be moved in the conveying direction through manual pushing or by obliquely arranging the conveyor 110 based on the conveying direction. The specific arrangement may be adaptively configured according to actual requirements. This is not limited herein.

In some embodiments, the lifting device 200 is arranged on a side of the conveying assembly 100, and the lifting device 200 is configured to dock with a robot, so that the robot can exchange goods or totes with the conveyor 110.

For example, the robot is a climbing robot. The lifting device 200 is, for example, located at a side of the conveying assembly 100 and extends in a vertical direction, and a structure of the lifting device 200 matches the climbing robot, so that the robot may move up and down along the lifting device 200. Therefore, the robot may dock with the conveyor 110, to enable the robot to exchange goods and totes with the conveyor 110.

For example, the conveyor 110 may convey goods or totes containing goods which have undergone operations such as sorting, inbound storage, and inventory checking, , to a docking position with the robot. The robot may move up and down along the lifting device, to match with the height of the conveyor 110, to perform an operation of picking up goods or totes from the conveyor 110. This reduces difficulty and costs of docking between the robot and the conveyor 110, and minimizes the occupation space during docking between the robot and the conveyor.

In some embodiments, the conveying assembly 100 includes two conveyors 110, the two conveyors 110 extend in the same direction, that is, the two conveyors 110 have the same extension direction, and are spaced apart in the vertical direction. It should be noted that, if the extension direction of the conveyor 110 is, for example, a horizontal direction, the vertical direction is an extension direction perpendicular to the horizontal plane.

Conveying directions of the two conveyors 110 are independent of each other, that is, the two conveyors 110 have a height difference in the vertical direction. This allows for efficient utilization of space in the vertical direction, thereby improving space utilization.

In some embodiments, as shown in FIG. 1 to FIG. 4, the two conveyors 110 include a first conveyor 110a and a second conveyor 110b. The first conveyor 110a is configured to convey an empty tote 410. For example, the first conveyor 110a may convey and accumulate through rolling or moving. The second conveyor 110b is configured to convey goods or the tote 400 containing goods. The first conveyor 110a and the second conveyor 110b have opposite conveying directions. For example, the conveying direction of the first conveyor 110a is moving to a side away from a docking position with the lifting device 200, and the conveying direction of the second conveyor 110b is moving to a side toward the docking position with the lifting device 200.

Along the extension direction of the conveyor 110, the lifting device 200 may be separately connected to the first conveyor 110a and the second conveyor 110b at the same position, to enable transfer between the first conveyor 110a and the second conveyor 110b. In this way, when the robot moves up and down along the lifting device 200, the robot may interact with the first conveyor 110a, to transport the empty tote 410. For example, the robot places the empty tote 410 onto the first conveyor 110a, or picks up the empty tote 410 from the first conveyor 110a. When moving up and down along the lifting device 200, the robot may further interact with the second conveyor 110b, to transport the goods or the tote 400, for example, may pick up the goods or totes from the second conveyor 110b. The goods or totes 400 picked up by the robot are goods or totes 400 that have undergone operations such as sorting, inbound storage, and inventory checking.

In the embodiments of this application, empty totes are supplied through the first conveyor 110a, goods or totes containing goods that have undergone operations such as sorting are conveyed through the second conveyor 110b, and the lifting device 200 is separately connected to the first conveyor 110a and the second conveyor 110b at the same position. This reduces difficulty and costs of docking between the robot and the conveying assembly 100, and improves work efficiency while minimizing the space occupation.

In some embodiments, the workstation 10 further includes a sorting device 300, the sorting device 300 is arranged on a side of the conveying assembly 100 and connected to the second conveyor 110b, and the sorting device 300 may complete operations such as sorting, inbound storage, and inventory checking of goods.

To improve the work efficiency, a plurality of sorting devices 300 may be provided, and the plurality of sorting devices 300 are spaced apart in the extension direction of the conveyor 110.

The sorting device 300 docks with the second conveyor 110b (as shown in FIG. 1 and FIG. 2). In this way, after the sorting device 300 completes a sorting operation on the goods, the goods or the tote 400 may be directly pushed onto the second conveyor 110b, to convey the totes 400 to the lifting device 200 through the second conveyor 110b.

In some embodiments, as shown in FIG. 2 and FIG. 3, the sorting device 300 and the lifting device 200 are respectively arranged on two opposite sides of the conveying assembly 100. In this way, a robot operation area can be separated from a human operation area, thereby improving safety.

In some embodiments, referring to FIG. 2 and FIG. 3, the lifting device 200 is located at an end of the conveying assembly 100 away from the sorting device 300. In this way, the conveying assembly 100 can be fully utilized to maximize temporary storage of the goods or the tote 400.

In some embodiments, referring to FIG. 3, the lifting device 200 includes a lifting rail 210, and the lifting rail 210 extends in the vertical direction.

For example, in FIG. 3, the lifting rail 210 is separately, in the vertical direction, connected to the same side of the first conveyor 110a and the second conveyor 110b at the same position, to enable transfer between the robot and the first conveyor 110a as well as the second conveyor 110b through the lifting rail 210.

In some embodiments, as shown in FIG. 3, two lifting rails 210 are provided. The two lifting rails 210 are spaced apart along the extension direction of the conveyor 110 and are arranged at a near end portion of the conveyor 110 that is away from the sorting device 300. In this way, the robot can move up and down along the two lifting rails 210, to place the empty tote onto the first conveyor 110a and pick up the goods or totes from the second conveyor 110b.

It may be understood that, the lifting rail 210 is arranged on the side of the near end portion of the conveyor 110, which can maximize the utilization space of the conveyor 110.

In some embodiments, as shown in FIG. 1, the conveyor 110 may be a powered conveyor, the powered conveyor 110 has at least two powered conveying sections 111, the at least two powered conveying sections 111 are spaced apart in the extension direction of the conveyor 110, and the powered conveying sections 111 are configured to drive goods or totes to move along the conveying direction of the conveyor 110.

It may be understood that, the powered conveyor 110 may drive, under a driving force of a power source such as a motor, goods or totes to move along the conveying direction of the conveyor 110, which can save labor and reduce the workload of operators.

In some embodiments, the conveyor 110 includes a connecting frame 113 and a plurality of rollers 114. The connecting frame 113 extends along the extension direction of the conveyor 110. The rollers 114 are rotatably connected to the connecting frame 113. In other words, the connecting frame 113 provides a support base for the rollers 114. The plurality of rollers 114 are sequentially spaced apart along the extension direction of the conveyor 110 and are rotatably connected to the connecting frame 113. For example, the roller 114, for example, has a cylindrical structure with a circular cross-section. In other words, the roller 114 has a smooth rotating surface, and when rotating around its own axis, may drive goods to move.

The plurality of rollers 114 include a first roller 114a. The first roller 114a is located in the powered conveying section 111. A plurality of first rollers 114a may be provided. The plurality of first rollers 114a are sequentially arranged and evenly spaced apart along the extension direction of the conveyor 110. The first roller 114a may be connected to a power source such as a motor, to provide power to the first roller 114a, so that the first roller 114a may rotate around its own axis to form the powered conveyor 110 that may drive goods to move along the conveyor 110, so that the rotation of the first roller 114a may drive goods to move along the conveyor 110.

In some embodiments, referring to FIG.1, the conveyor 110 further includes a connecting section 112, and the connecting section 112 is connected between adjacent powered conveying sections 111. The plurality of rollers 114 include a second roller 114b, and a plurality of second rollers 114b may be provided. The plurality of second rollers 114b are spaced apart in the connecting section 112 along the extension direction of the conveyor 110. In this way, the second roller 114b is configured to rotate under the drive of goods moving along the conveyor 110.

In other words, the powered conveying section 111 and the connecting section 112 are alternately arranged along the extension direction of the conveyor 110. In this way, the first roller 114a of the powered conveying section 111 drives goods to move along the conveying direction. When the goods or totes move to the connecting section 112, the inertia of the goods or totes may drive the second roller 114b to rotate, so that the goods or totes pass through the connecting section 112, thereby saving power and achieving energy saving.

For example, at least one of the first conveyor 110a and the second conveyor 110b includes the powered conveying section 111 and the connecting section 112 that are alternately arranged along the extension direction of the conveyor 110. For example, both the first conveyor 110a and the second conveyor 110b include the powered conveying section 111 and the connecting section 112 that are alternately arranged along the extension direction of the conveyor 110. In this way, the first roller 114a of the powered conveying section 111 drives goods or totes to move along the conveying direction. When the goods move to the connecting section 112, the inertia of the goods or totes may drive the second roller 114b to rotate, so that the goods pass through the connecting section 112, thereby saving power and achieving energy saving.

It should be noted that, lengths of the first conveyor 110a and the second conveyor 110b may be adaptively set according to actual requirements, and lengths and quantities of the powered conveying sections 111 and the connecting sections 112 may also be adaptively set according to actual requirements, rather than being fixed in length or section.

For example, a quantity of powered conveying sections 111 of the first conveyor 110a may be greater than the quantity of powered conveying sections 111 of the second conveyor 110b, to improve efficiency of goods conveying on the second conveyor 110b, thereby improving, for example, inbound efficiency of the workstation 10.

For example, 1 to 10 powered conveying sections 111 of the first conveyor 110a may be provided. For example, 1, 2, 3, 5, 8, or 10 powered conveying sections 111 of the first conveyor 110a may be provided. For example, 5 to 15 powered conveying sections 111 of the second conveyor 110b may be provided. For example, 5, 8, 10, 12, or 15 powered conveying sections 111 of the second conveyor 110b may be provided. A quantity of second rollers 114b in each connecting section 112 may be the same or different.

In some embodiments, the sorting device 300 includes a sorting position 310 arranged on a side of the conveyor 110. The sorting position 310 includes, for example, a sorting table. The sorting table may allow an operator to perform sorting operations. For example, operators may complete operations required for inbound storage of goods on the sorting table (for example, re-boxing the goods, that is, removing the original packaging of the goods, and placing the goods into an empty tote 410), and then push the tote 400 containing the goods onto the second conveyor 110b, so that the tote 400 is conveyed to a docking position with the robot through the second conveyor 110b. The robot picks up the tote 400 to complete operations such as inbound storage, inventory checking, and sorting.

In some embodiments, referring to FIG. 1 and FIG. 2, the sorting device 300 further includes a transfer mechanism 320. Two ends of the transfer mechanism 320 are connected between the sorting position 310 and the conveyor 110. For example, one end of the transfer mechanism 320 docks with the sorting position 310, and the other end of the transfer mechanism 320 docks with the second conveyor 110b. In this way, after the sorting operation is completed, the operator may push the tote 400 containing the goods onto the transfer mechanism 320, to convey the tote 400 to the second conveyor 110b through the transfer mechanism 320, so that the second conveyor 110b conveys the totes 400 to the docking position with the robot.

In the embodiments of this application, the transfer mechanism 320 is arranged between the sorting position 310 and the second conveyor 110b. In this way, after the sorting operation is completed, the operator may load the sorted goods into the tote 400, and push the goods onto the transfer mechanism 320, so that the goods are transferred to the conveyor 110 through the transfer mechanism 320, eliminating the need for manual lifting, thereby improving the friendliness between humans and machines and reducing manual labor.

In some embodiments, the first conveyor 110a is located above the second conveyor 110b, to convey and accumulate empty totes 410. This makes it convenient for the operator to retrieve the empty totes while improving space utilization.

In some embodiments, the transfer mechanism 320 may be a powered transfer belt, a powered rolling member, or an unpowered rolling member, as long as it can convey the tote 400 to the conveyor 110.

For example, in FIG. 1, the transfer mechanism 320 includes a plurality of rolling members sequentially arranged between the sorting position 310 and the second conveyor 110b, to drive, through their own rolling motion, the tote 400 to move to the second conveyor 110b. The rolling member, for example, has a cylindrical structure or a columnar structure with a circular cross-section. The operator may push the tote 400, causing the tote 400 to move to the second conveyor 110b along the surface of the rolling members. Alternatively, a power source such as a motor drives the rolling members to rotate around their own axis, to drive the tote 400 to move to the second conveyor 110b.

In some embodiments, along the conveying direction of the second conveyor 110b, at least one of a weighting module, a height detection module, and an anomaly ejection port (not shown in the figure) is spaced apart downstream of the sorting position 310. The anomaly ejection port is arranged downstream of the weighting module and/or the height detection module.

It should be noted that, the downstream of the sorting position 310 refers to a side away from the sorting position 310 in a flow direction of the conveyor connected to the sorting position 310.

The weighting module may detect a weight of each tote 400 containing goods. Accordingly, the workstation 10 has an indicator light or a buzzer for overweight alarms. When an overweight alarm is triggered, the operator may pull the tote 400 back to the sorting position 310, re-process the goods stored in the totes 400, and then re-convey the goods onto the conveyor 110. Accordingly, the height detection module is configured to detect whether the tote 400 exceeds a height limit. Accordingly, the workstation 10 has an overheight alarm. When the overheight alarm is triggered, the tote 400 is manually pulled back to the sorting position 310, reprocessed, and then re-conveyed to the conveyor 110.

In addition, the anomaly ejection port may be arranged on a side of the conveyor 110. When an anomaly is detected in the tote 400, for example, overweight, overheight, or other irregularities, anomalous goods or totes may also be ejected through the anomaly ejection port.

In some embodiments, an abnormal removing area is further arranged at a position corresponding to the anomaly ejection port on a side of the conveyor 110, to serve as a cache area of the abnormal goods or tote.

In some embodiments, referring to FIG. 3, the conveying assembly 100 is further provided with a support frame 600, the support frame 600 is configured to support the conveyor 110, and the lifting device 200 is arranged within the support frame 600, thereby making the lifting device 200 more stable.

In some embodiments, referring to FIG. 1, FIG. 2, and FIG. 4, along the conveying direction of the conveyor 110, a plurality of sorting devices 300 are sequentially spaced apart on a side of the conveyor 110, allowing a plurality of operators perform operations such as sorting, thereby improving sorting efficiency and improving overall work efficiency of the workstation 10.

Each sorting position 310 is provided with a sorting table and an Internet technology (Internet Technology, IT for short) device 330 located on the sorting table. The IT device 330, such as a computer, is used to record relevant sorting information of goods, such as inbound information of the goods.

It should be noted that, a quantity of sorting devices 300 may be flexibly set according to actual requirements. This is not specifically limited herein.

In some embodiments, referring to FIG. 4, a protective net 500 is further arranged on a side of the conveyor 110 close to the sorting device 300, to improve safety of operators.

It may be understood that, in some embodiments, the first conveyor 110a may be arranged below the second conveyor 110b. In some embodiments, the first conveyor 110a may further be used to convey goods or the tote 400 containing goods, and the second conveyor 110b may be used to convey the empty tote 410.

A second aspect of embodiments of this application provides a logistics system, including a robot 20 and the workstation 10 provided in the foregoing embodiments. The robot 20 is configured to transport goods or totes to the workstation 10, or transport goods or totes from the workstation to another destination.

The workstation 10 is, for example, a goods inbound workstation. A specific structure and working principle of the workstation 10 have been described in detail in the foregoing embodiments. Details are not described herein again.

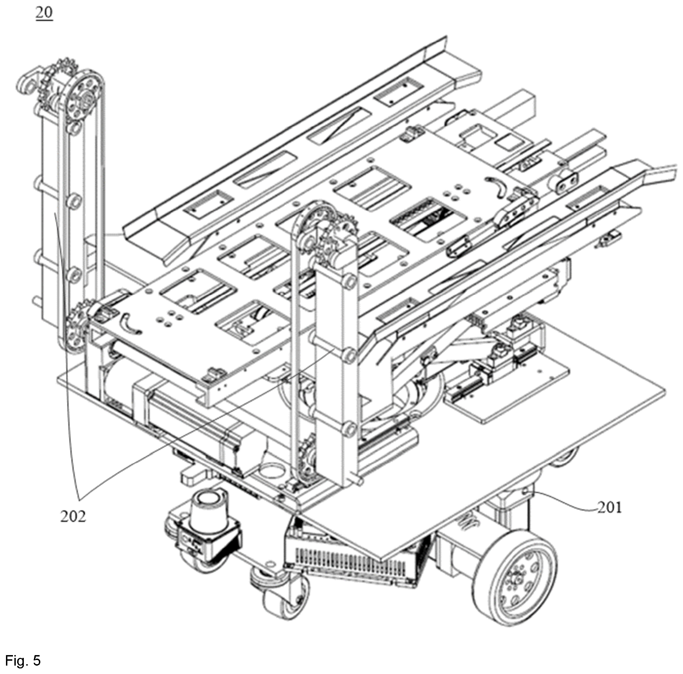

Referring to FIG. 5, the robot 20 includes a robot body 201 and a climbing assembly 202 arranged on a side of the robot body 201, the workstation 10 includes a conveying assembly 100 and a lifting device 200 arranged on a side of the conveying assembly 100, the lifting device 200 includes a lifting rail 210 arranged on a side of the conveying assembly 100, and the robot 20 ascends and descends on the lifting rail 210 through the climbing assembly 202, and picks up or places goods or totes from or onto the conveying assembly 100. Specifically, for a specific structure and working principle of the robot 20, refer to the related technology of the climbing robot. Details are not described herein.

The logistics system provided in the embodiments of this application has the same beneficial effects as the workstation provided in the foregoing embodiments. Details are not described herein again.

The embodiments or implementations in this specification are all described in a progressive manner. Descriptions of each of the embodiments focuses on differences from other embodiments, and reference may be made to each other for the same or similar parts among respective embodiments.

In the descriptions of this specification, the descriptions of the reference terms such as "an implement", "some implements", "exemplary implements", "example", "specific example", or "some examples" refers to that the specific features, structures, materials or characteristics described with reference to the implement or example are included in at least one implement or example of this application. In this specification, schematic descriptions of the foregoing terms are not necessarily directed at the same implementation or example. In addition, the described specific feature, structure, material, or characteristic may be combined in a proper manner in any one or more implementations or examples.

In conclusion, it should be noted that, the descriptions and embodiments are merely intended to describe the technical solutions of this application, rather than limit this application. Although this application is described in detail with reference to foregoing embodiments, a person of ordinary skill in the art should understand that modifications can still be made to the technical solutions described in foregoing embodiments or equivalent replacements can be made to some or all technical features thereof, without departing from the scope of the technical solutions of the embodiments of this application.

## Claims

1. A workstation, comprising: a conveying assembly and a lifting device, wherein the conveying assembly comprises a conveyor, the lifting device is arranged on a side of the conveying assembly, and the lifting device is configured to dock with a robot, to enable the robot to exchange goods or totes with the conveyor.

2. The workstation according to claim 1, wherein the conveying assembly comprises two conveyors, and the two conveyors extend in the same direction and are spaced apart in a vertical direction.

3. The workstation according to claim 2, wherein the two conveyors comprise a first conveyor and a second conveyor, the first conveyor is configured to convey empty totes, the second conveyor is configured to convey totes containing goods, and the first conveyor and the second conveyor have opposite conveying directions.

4. The workstation according to claim 3, further comprising: a sorting device, wherein the sorting device is arranged on a side of the conveying assembly and connected to the second conveyor.

5. The workstation according to claim 4, wherein the sorting device and the lifting device are respectively arranged on two opposite sides of the conveying assembly.

6. The workstation according to claim 5, wherein the lifting device is arranged on a side of the conveying assembly in a length direction and located at an end portion away from the sorting device.

7. The workstation according to any one of claims 1 to 6, wherein the lifting device comprises a lifting rail, and the lifting rail extends in the vertical direction.

8. The workstation according to claim 7, wherein two lifting rails are provided, and the two lifting rails are spaced apart in the length direction of the conveying assembly.

9. The workstation according to any one of claims 4 to 6, wherein the sorting device comprises a sorting position and a transfer mechanism, and two ends of the transfer mechanism are respectively connected to the sorting position and the second conveyor.

10. The workstation according to claim 9, wherein the second conveyor is located below the first conveyor, and the transfer mechanism docks with the second conveyor, to cause goods or totes at the sorting position to be transferred to the second conveyor through the transfer mechanism.

11. The workstation according to claim 9, wherein the first conveyor is located below the second conveyor.

12. The workstation according to any one of claims 1 to 6, wherein the conveying assembly is further provided with a support frame, the support frame is configured to support the conveyor, and the lifting device is arranged in the support frame.

13. A logistics system, comprising a robot and the workstation according to any one of claims 1 to 12, wherein the robot is configured to transport goods or totes to the workstation or transport goods or totes from the workstation to another destination.

14. The logistics system according to claim 13, wherein the robot comprises a robot body and a climbing assembly arranged on a side of the robot body, the lifting device comprises a lifting rail arranged on a side of a conveying assembly, and the robot is configured to ascend or descend on the lifting rail through the climbing assembly, and picks up or places goods or totes from or onto the conveying assembly.
